# FASCICULE DE BREVET EUROPEEN

(11) **EP 4 067 227 B1**
(45) Date de publication et mention de la délivrance du brevet: **06.09.2023**
(21) Numéro de dépôt: 22165795.0
(22) Date de dépôt: 31.03.2022
(51) Int. Cl.: B64C 7/02

(54) **NACELLE D'AÉRONEF COMPORTANT UN SYSTÈME DE JOINT AVEC RESSORT POUR UNE CASQUETTE DE LADITE NACELLE**
LUFTFAHRZEUGGONDEL UMFASSEND EIN VERBINDUNGSSYSTEM MIT FEDER FÜR EINE HAUBE DIESER GODEL
AIRCRAFT NACELLE COMPRISING A JOINT SYSTEM WITH SPRING FOR A CAP OF SAID NACELLE

(30) Priorité: 02.04.2021 FR 2103426
(43) Date de publication de la demande: 05.10.2022
(73) Titulaire: AIRBUS OPERATIONS (S.A.S.), 31060 Toulouse (FR)
(72) Inventeur: GELIOT, Jean, 31060 TOULOUSE (FR); THERON, Thierry, 31060 TOULOUSE (FR); SAMMITO, Laurent, 31060 TOULOUSE (FR)
(74) Mandataire: Sarraméa, Claude

(56) Documents cités:
- WO-A1-2010/007311
- WO-A1-2010/007313
- FR-A1- 3 087 751

## Description

La présente invention concerne une nacelle d'aéronef comportant une casquette et un système de joint comportant un système ressort, ainsi qu'un aéronef comportant une telle nacelle.

Un aéronef comporte classiquement un fuselage de part et d'autre duquel est fixée une aile. Chaque aile supporte au moins un mât d'accrochage qui supporte à son tour une nacelle et un moteur formant une turbomachine. La nacelle forme la surface aérodynamique qui entoure le moteur. Le mât d'accrochage est fixé entre la structure de l'aile et la nacelle.

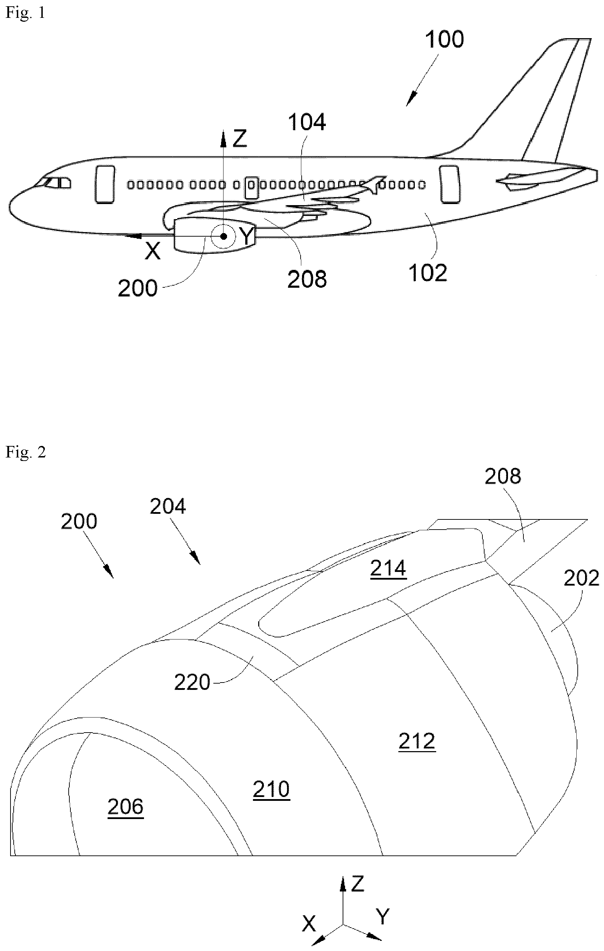

La figure 2 montre une vue en perspective d'un système de propulsion 200 comportant un moteur 202 représenté ici par sa tuyère, et une nacelle 204. La nacelle 204 présente une entrée d'air 206 et elle est fixée à l'aile par le mât 208.

La nacelle 204 comporte une structure qui se fixe au mât 208 et qui porte une pluralité de capots parmi lesquels on trouve un capot d'entrée d'air 210 qui entoure l'entrée d'air 206, des capots latéraux 212, en particulier des capots de soufflante et des capots d'inversion de poussée, qui sont de part et d'autre de la nacelle 204, et un capot supérieur 214 assurant le carénage autour de la jonction entre le mât 208 et la structure de la nacelle 204.

La nacelle 204 comporte également une casquette 220 qui est un capot ayant un rôle aérodynamique et qui assure la liaison aérodynamique entre le capot d'entrée d'air 210, les capots latéraux 212 et le capot supérieur 214.

Cette casquette 220 est généralement mobile pour assurer la continuité aérodynamique avec l'entrée d'air 206 et les capots.

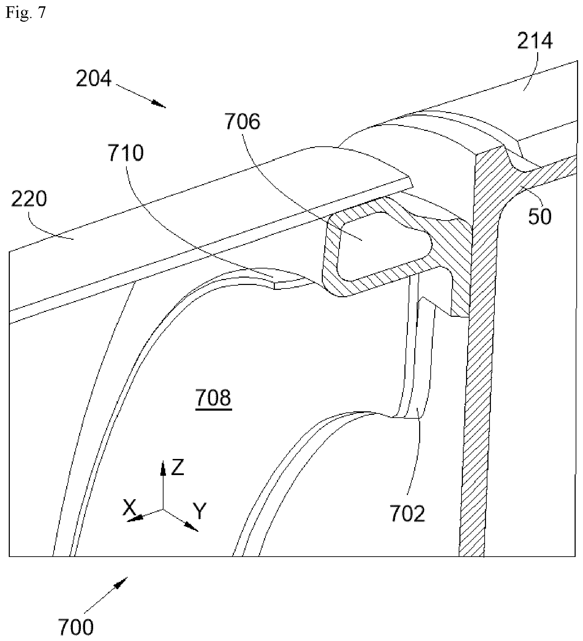

La figure 7 montre une vue en coupe par un plan vertical de la nacelle 204 au niveau de la jonction entre le capot supérieur 214 et la casquette 220. La nacelle 204 comporte un système de joint 700 qui est arrangé au niveau de la jonction entre le capot supérieur 214 et la casquette 220.

Le système de joint 700 assure deux fonctions principales.

Le système de joint 700 assure l'étanchéité, en particulier au feu.

Le système de joint 700 assure également une compensation dimensionnelle en assurant la reprise des tolérances de fabrication et les variations de position de la casquette 220.

Le système de joint 700 comporte une base 702 fixée à la structure 50 de la nacelle 204 et un bourrelet 706 solidaire de la base 702. La base 702 et le bourrelet 706 sont un seul et même élément qui est réalisé en matière relativement souple du type élastomère.

Le bourrelet 706 vient se plaquer sous la casquette 220 et le système de joint 700 est arrangé de manière à obturer le passage entre le bord arrière de la casquette 220, le capot supérieur 214 et la structure 50.

Pour éviter un écrasement trop important du bourrelet 706, sous l'effet de la casquette 220, le système de joint 700 comporte également un renfort 708 qui est fixé sur la base 702 et présente un pli 710 qui vient à l'arrière du bourrelet 706 par rapport à la casquette 220. Le bourrelet 706 se positionne ainsi entre le pli 710 et la casquette 220.

Bien qu'un tel arrangement donne entière satisfaction, l'augmentation des dimensions des nacelles 204 entraîne une augmentation de la section du bourrelet 706 pour que ce dernier puisse travailler sans atteindre un écrasement trop important.

Il est donc nécessaire de trouver un arrangement ne nécessitant pas un bourrelet de forte section. Un objet de la présente invention est de proposer une nacelle d'aéronef comportant une casquette et un système de joint qui assure l'étanchéité entre le capot supérieur et la casquette ainsi que le rattrapage dimensionnel.

À cet effet, est proposée une nacelle d'aéronef telle que revendiquée à la revendication 1.

L'invention propose également un aéronef comportant un mât d'accrochage ainsi qu'une nacelle telle que revendiquée à la revendication 1. Les demandes de brevet WO2010/007313 et WO2010/007311 décrivent l'art antérieur de la revendication 1.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1 est une vue de côté d'un aéronef selon l'invention,
- la figure 2 est une vue en perspective d'une nacelle, et
- la figure 3 est une vue en perspective et en coupe par un plan vertical XZ d'une nacelle selon l'invention,
- la figure 4 est une vue de derrière du système de joint selon l'invention,
- la figure 5 est une vue de derrière d'un détail du système de joint selon l'invention,
- la figure 6 est une vue en coupe du système de joint selon l'invention, et
- la figure 7 est une vue en perspective et en coupe par un plan vertical XZ d'une nacelle de l'état de la technique.

Dans la description qui suit, les termes relatifs à une position sont pris en référence à une nacelle montée sur un aéronef en marche avant, c'est-à-dire comme elle est représentée sur la figure 1.

La figure 1 montre un aéronef 100 qui comporte un fuselage 102 de part et d'autre duquel est fixée une aile 104. Sous chaque aile 104 est fixé un mât d'accrochage 208 auquel est accroché un système de propulsion 200 qui comporte une nacelle et un moteur entouré par la nacelle.

Dans la description qui suit, et par convention, on appelle X l'axe longitudinal de la nacelle orienté positivement dans le sens d'avancement de l'aéronef 100 et qui est également parallèle à l'axe longitudinal de l'aéronef 100, on appelle Y l'axe transversal de la nacelle qui est horizontal lorsque l'aéronef 100 est au sol, et Z l'axe vertical ou hauteur verticale lorsque l'aéronef 100 est au sol, ces trois directions X, Y et Z étant orthogonales entre elles et formant un repère orthonormé.

La figure 2 montre une vue en perspective d'un système de propulsion 200 qui est similaire à celui de l'état de la technique puisque seul le système de joint de la casquette 220 est différent et non visible sur cette figure.

Ainsi, le système de propulsion comporte le moteur 202 et la nacelle 204 dont la structure est fixée au mât 208. Dans l'exemple de réalisation de la figure 2, la nacelle 204 comporte, fixée sur sa structure, plusieurs capots (ou carénages) afin de réaliser une surface aérodynamique.

La nacelle 204 comprend une structure 50 sur laquelle sont fixés autour de son entrée d'air 206, un capot d'entrée d'air 210, de part et d'autre de la nacelle 204, des capots latéraux 212 et au-dessus de la nacelle 204, un capot supérieur 214.

La nacelle 204 comporte une casquette 220 qui est fixée par tous moyens de fixation appropriés sur la structure de la nacelle 204. La casquette 220 est généralement montée articulée sur la structure.

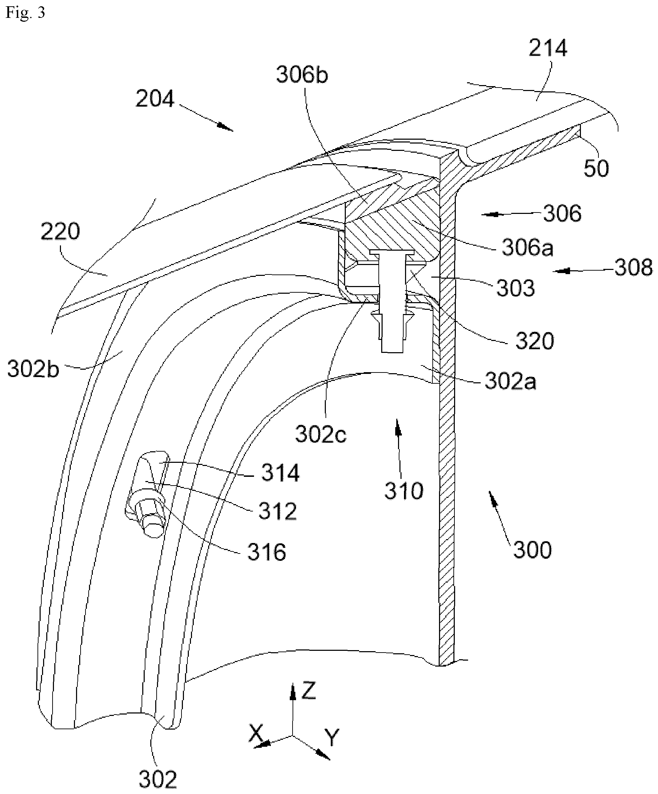

La figure 3 est similaire à la figure 7 sauf que le système de joint 300 selon l'invention est différent.

Le système de joint 300 comporte une arche 302 fixée à la structure 50 de la nacelle 204 et formant une gorge 303 qui s'étend sous le bord arrière de la casquette 220. La gorge 303 présente un fond et s'étend angulairement au moins sur la même étendue angulaire que la casquette 220 autour de l'axe longitudinal X.

Dans le mode de réalisation de l'invention présenté ici, la gorge 303 est réalisée entre l'arche 302 et la structure 50 de la nacelle 204. L'arche 302 présente ici une section en escalier dont une première contremarche 302a est fixée à la structure 50 par tous moyens appropriés tels que des rivets, des points de soudure, etc, dont une deuxième contremarche 302b s'étend parallèlement à la structure 50 et à distance de celle-ci afin de délimiter entre elles l'épaisseur de la gorge 303 et dont la marche 302c qui s'étend entre les deux contremarches 302a-b forme le fond de la gorge 303. Dans ce mode de réalisation, la deuxième contremarche 302b forme la paroi avant de la gorge 303 et la structure 50 forme la paroi arrière de la gorge 303.

Bien sûr, la gorge 303 pourrait être réalisée par d'autres moyens. Par exemple, l'arche avec la section en escalier pourrait être remplacée par une arche avec une section en U formant directement la gorge 303 et fixée par l'un de ses flancs à la structure 50. Dans ce mode de réalisation, le flanc fixé à la structure 50 forme la paroi arrière de la gorge 303 et le flanc opposé forme la paroi avant de la gorge 303.

Le système de joint 300 comporte également un joint 306, du type joint élastomère, sous la forme d'un bloc plein logé dans la gorge 303, c'est-à-dire entre la paroi avant et la paroi arrière, et s'étendant angulairement également sur la même étendue angulaire que la casquette 220 autour de l'axe longitudinal X.

Le joint 306 est ainsi sous le bord arrière de la casquette 220.

Le système de joint 300 comporte également un système ressort 308 qui est arrangé pour pousser le joint 306 contre la casquette 220 c'est-à-dire pour l'éloigner du fond de la gorge 303. Le joint 306 est en outre guidé par les parois avant et arrière de la gorge 303 lors de la poussée du système ressort 308.

Le système de joint 300 comporte également des moyens de retenue 310 qui sont prévus pour empêcher le joint 306 de sortir de la gorge 303 sous l'effet du système ressort 308.

Avec un tel système de joint 300, il n'est plus nécessaire de surdimensionner le bourrelet du système de joint puisque celui-ci est remplacé par un bloc. Les deux fonctions d'étanchéité et de compensation dimensionnelle sont ici dissociées avec le joint 306 assurant l'étanchéité et le système ressort 308 assurant la compensation dimensionnelle.

Dans le mode de réalisation de l'invention présenté ici, les moyens de retenue 310 comportent une pluralité d'inserts 312, chacun présentant une première extrémité solidaire du joint 306 et une deuxième extrémité qui traverse le fond de la gorge 303, ici la marche 302c, à travers un trou 314 traversant ledit fond et prévu à cet effet.

Les moyens de retenue 310 comportent également un épaulement 316 solidaire de la deuxième extrémité de l'insert 312 et dont les dimensions l'empêchent de passer à travers le trou 314 du fond. Ainsi, lorsque le système ressort 308 repousse le joint 306, l'épaulement 316 vient en appui contre le fond et bloque le déplacement du joint 306.

Dans le mode de réalisation de l'invention présenté ici, l'insert 312 est une tige filetée dont une extrémité est noyée dans le joint 306 et l'épaulement 316 est un écrou vissé sur la tige filetée.

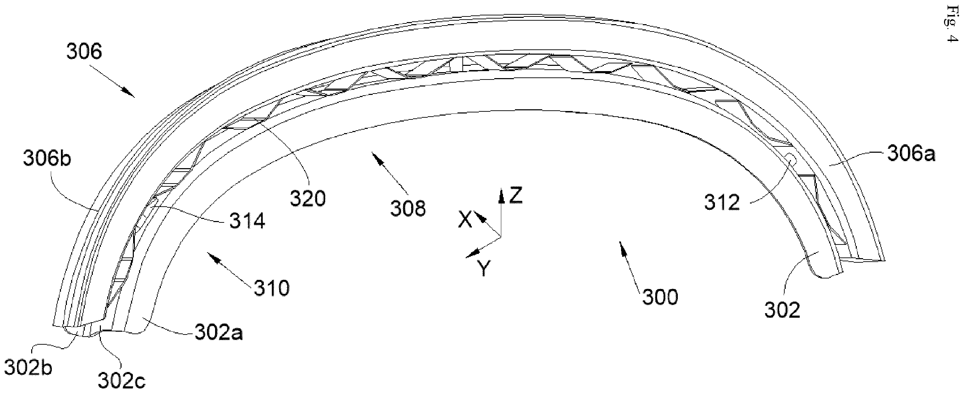

Comme le montre la figure 4, dans le mode de réalisation de l'invention présenté ici, il y a trois inserts 312 dont un insert central qui est disposé au niveau du plan milieu XZ et dont deux inserts latéraux qui sont disposés symétriquement de part et d'autre du plan milieu XZ. Pour assurer le blocage selon l'axe longitudinal Y, le trou 314 correspondant à l'insert central 312 est un alésage circulaire dimensionné pour assurer un ajustement glissant entre l'insert 312 et le trou 314. Les trous 314 des inserts latéraux 312 sont des trous oblongs pour permettre le déplacement parallèlement à l'axe Z des inserts latéraux 312. Bien sûr, le nombre d'inserts latéraux 312 peut être différent selon les dimensions de l'arche 302.

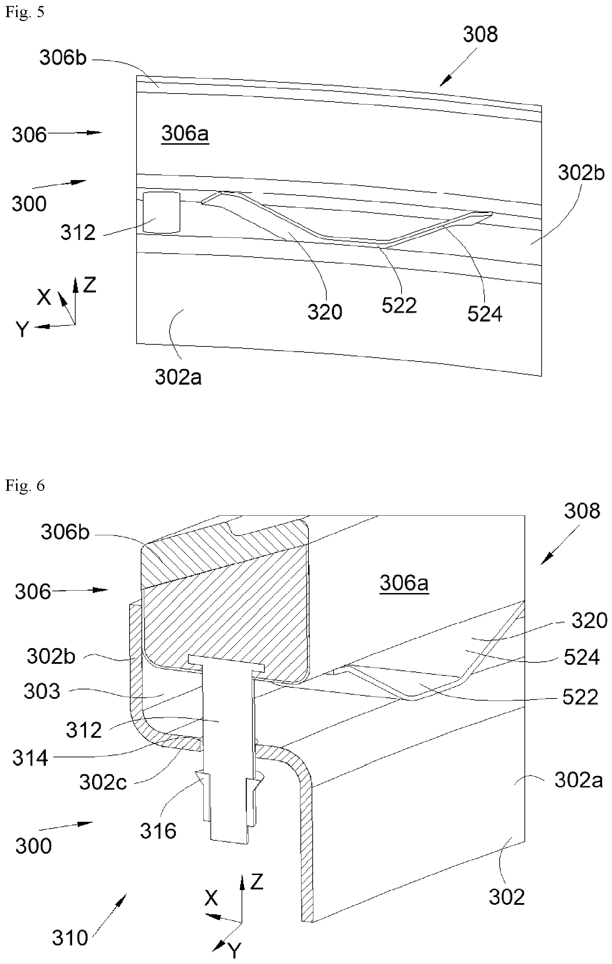

Comme le montrent la figure 5 et la figure 6, dans le mode de réalisation de l'invention présenté ici, le système ressort 310 comporte une pluralité de lames ressort 320. Chaque lame ressort 320 est disposée entre le joint 306 et le fond de la gorge 303. Les lames ressort 320 sont réparties sur toute l'étendue angulaire de la gorge 303 pour assurer une poussée régulière sur tout le joint 306. Bien sûr, le nombre et les dimensions des lames ressort 320 varient avec les dimensions de l'arche 302.

Chaque lame ressort 320 est conformée pour réaliser une poussée perpendiculairement au fond de la gorge 303.

Ici, chaque lame ressort 320 comporte une partie centrale 522 fixée au fond de la gorge 303, par exemple par rivetage ou soudage, et deux ailes 524 disposées de part et d'autre de la partie centrale 522 et orientées vers le joint 306. À l'installation, les ailes 524 sont précontraintes de manière à repousser le joint 306 même si aucun effort ne s'exerce sur ledit joint 306.

Le joint 306 est constitué d'une âme 306a et d'une bande 306b.

L'âme 306a est la partie inférieure du joint 306, c'est-à-dire celle qui est orientée vers le fond de la gorge 303, et est en contact avec le système de ressort 310, et plus particulièrement celle contre laquelle les ailes 524 sont en appui, c'est aussi la partie à laquelle les inserts 312 sont fixés.

La bande 306b est une partie qui est fixée à l'âme 306a, par exemple par collage, et qui vient en appui contre la casquette 220, c'est donc la partie qui est entre l'âme 306a et la casquette 220.

Pour une meilleure résistance au feu, le joint 306 est réalisé en élastomère renforcé avec des fibres de verre.

La bande 306b présente une dureté Shore relativement faible et préférentiellement de l'ordre d'une dureté Shore 00 de 30 à 40 pour une épaisseur de la bande de l'ordre de 5 mm.

L'âme 306a est relativement souple ce qui favorise entre autres avec le système ressort 308 une pression régulière de la bande 306b contre la casquette 220. La dureté de l'âme 306a est préférentiellement d'une dureté Shore 00 de 80 à 90 pour une épaisseur de l'âme 306a de l'ordre de 15 mm.

Afin de limiter l'usure par frottement de l'âme 306a contre les parois de la gorge 303 et les lames ressort 320, les parois de l'âme 306a en contact avec les parois de la gorge 303 et le système ressort 310, c'est-à-dire ici les lames ressort 320, sont recouvertes d'une toile, du type toile en fibres de verre.

## Revendications

1. Nacelle (204) d'aéronef (100) comportant une structure (50), une casquette (220) fixée à la structure (50) et un système de joint (300) comportant :
- une arche (302) formant une gorge (303) qui s'étend sous un bord arrière de la casquette (220) et qui présente un fond, où l'arche (302) est fixée à la structure (50),
- un joint (306) sous la forme d'un bloc plein logé dans la gorge (303) et disposé sous le bord arrière de la casquette (220), **caractérisé en ce que** la nacelle comporte en outre
- un système ressort (308) arrangé pour éloigner le joint (306) du fond, et
- des moyens de retenue (310) arrangés pour empêcher le joint (306) de sortir de la gorge (303) sous l'effet du système ressort (308).

2. Nacelle (204) selon la revendication 1, **caractérisée en ce que** les moyens de retenue (310) comportent une pluralité d'inserts (312), chacun présentant une première extrémité solidaire du joint (306) et une deuxième extrémité qui traverse le fond de la gorge (303) à travers un trou (314) traversant ledit fond et prévu à cet effet, et un épaulement (316) solidaire de la deuxième extrémité de l'insert (312) et dont les dimensions l'empêchent de passer à travers le trou (314) du fond.

3. Nacelle (204) selon la revendication 2, **caractérisée en ce qu'**un insert central (312) est arrangé au niveau d'un plan milieu (XZ), et **en ce que** le trou (314) correspondant à l'insert central (312) est un alésage circulaire assurant un ajustement glissant entre l'insert (312) et le trou (314).

4. Nacelle (204) selon l'une des revendications 1 à 3, **caractérisée en ce que** le système ressort (310) comporte une pluralité de lames ressort (320), **en ce que** chaque lame ressort (320) est disposée entre le joint (306) et le fond de la gorge (303), et **en ce que** chaque lame ressort (320) comporte une partie centrale (522) fixée au fond de la gorge (303) et deux ailes (524) disposées de part et d'autre de la partie centrale (522) et orientées vers le joint (306).

5. Nacelle (204) selon l'une des revendications 1 à 4, **caractérisée en ce que** le joint (306) est constitué d'une âme (306a) orientée vers le fond de la gorge (303) et d'une bande (306b) qui est solidaire de l'âme (306a) et destinée à venir en appui contre la casquette (220).

6. Nacelle (204) selon la revendication 5, **caractérisée en ce que** la bande (306b) présente une dureté Shore 00 de 30 à 40, et l'âme (306a) présente une dureté Shore 00 de 80 à 90.

7. Nacelle (204) selon l'une des revendications 5 ou 6, **caractérisée en ce que** les parois de l'âme (306a) en contact avec les parois de la gorge (303) et le système ressort (310) sont recouvertes d'une toile.

8. Nacelle (204) selon l'une des revendications 1 à 7, **caractérisée en ce que** l'arche (302) présente une section en escalier dont une première contremarche (302a) est fixée à la structure (50), dont une deuxième contremarche (302b) s'étend parallèlement à la structure (50) et à distance de celle-ci afin de délimiter entre elles l'épaisseur de la gorge (303) et dont la marche (302c) s'étend entre les deux contremarches (302a-b) et forme le fond de la gorge (303).

9. Nacelle (204) selon l'une des revendications 1 à 7, **caractérisée en ce que** l'arche (302) présente une section en U formant la gorge (303) et fixée par l'un de ses flancs à la structure (50).

10. Aéronef (100) comportant un mât d'accrochage (208) et une nacelle (204) selon l'une des revendications précédentes, accrochée audit mât d'accrochage (208).

## Patentansprüche

1. Gondel (204) eines Luftfahrzeugs (100), welche eine Struktur (50), eine an der Struktur (50) befestigte Kappe (220) und ein Verbindungssystem (300) umfasst, welches umfasst:
- einen Bogen (302), der eine Auskehlung (303) bildet, welche sich unter einem hinteren Rand der Kappe (220) erstreckt und welche einen Boden aufweist, wo der Bogen (302) an der Struktur (50) befestigt ist,
- ein Verbindungsstück (306) in der Form eines massiven Blocks, der in der Auskehlung (303) aufgenommen und unter dem hinteren Rand der Kappe (220) angeordnet ist, **dadurch gekennzeichnet, dass** die Gondel außerdem umfasst:
- ein Federsystem (308), das dazu eingerichtet ist, das Verbindungsstück (306) von dem Boden zu entfernen, und
- Haltemittel (310), die dazu eingerichtet sind zu verhindern, dass sich das Verbindungsstück (306) unter der Wirkung des Federsystems (308) aus der Auskehlung (303) hinausbewegt.

2. Gondel (204) nach Anspruch 1, **dadurch gekennzeichnet, dass** die Haltemittel (310) mehrere Einsätze (312) umfassen, die jeweils ein mit dem Verbindungsstück (306) fest verbundenes erstes Ende und ein zweites Ende, welches den Boden der Auskehlung (303) durch ein den Boden durchquerendes und zu diesem Zweck vorgesehenes Loch (314) durchquert, aufweisen, und eine Schulter (316), die mit dem zweiten Ende des Einsatzes (312) fest verbunden ist und deren Abmessungen ihn daran hindern, sich durch das Loch (314) des Bodens hindurchzubewegen.

3. Gondel (204) nach Anspruch 2, **dadurch gekennzeichnet, dass** ein zentraler Einsatz (312) an einer Mittelebene (XZ) angeordnet ist, und dadurch, dass das Loch (314), das dem zentralen Einsatz (312) entspricht, eine kreisförmige Bohrung ist, die einen Gleitsitz zwischen dem Einsatz (312) und dem Loch (314) sicherstellt.

4. Gondel (204) nach einem der Ansprüche 1 bis 3, **dadurch gekennzeichnet, dass** das Federsystem (310) mehrere Federblätter (320) umfasst, dadurch, dass jedes Federblatt (320) zwischen dem Verbindungsstück (306) und dem Boden der Auskehlung (303) angeordnet ist, und dadurch, dass jedes Federblatt (320) einen zentralen Teil (522), der am Boden der Auskehlung (303) befestigt ist, und zwei Schenkel (524), die beiderseits des zentralen Teils (522) angeordnet und dem Verbindungsstück (306) zugewandt sind, umfasst.

5. Gondel (204) nach einem der Ansprüche 1 bis 4, **dadurch gekennzeichnet, dass** das Verbindungsstück (306) aus einem Kern (306a), der dem Boden der Auskehlung (303) zugewandt ist, und einem Streifen (306b), welcher mit dem Kern (306a) fest verbunden ist und dazu bestimmt ist, an der Kappe (220) zur Anlage zu kommen, besteht.

6. Gondel (204) nach Anspruch 5, **dadurch gekennzeichnet, dass** der Streifen (306b) eine Shore-Härte 00 von 30 bis 40 aufweist und der Kern (306a) eine Shore-Härte 00 von 80 bis 90 aufweist.

7. Gondel (204) nach einem der Ansprüche 5 oder 6, **dadurch gekennzeichnet, dass** die Wände des Kerns (306a), die sich mit den Wänden der Auskehlung (303) und dem Federsystem (310) in Kontakt befinden, mit einem Tuch bedeckt sind.

8. Gondel (204) nach einem der Ansprüche 1 bis 7, **dadurch gekennzeichnet, dass** der Bogen (302) einen Querschnitt in Form einer Treppe aufweist, von der eine erste Setzstufe (302a) an der Struktur (50) befestigt ist, von der sich eine zweite Setzstufe (302b) parallel zu der Struktur (50) und in einem Abstand von dieser erstreckt, um dazwischen die Dicke der Auskehlung (303) zu begrenzen, und von der die Trittstufe (302c) sich zwischen den zwei Setzstufen (302a-b) erstreckt und den Boden der Auskehlung (303) bildet.

9. Gondel (204) nach einem der Ansprüche 1 bis 7, **dadurch gekennzeichnet, dass** der Bogen (302) einen U-förmigen Querschnitt aufweist, der die Auskehlung (303) bildet und mit einem seiner Seitenteile an der Struktur (50) befestigt ist.

10. Luftfahrzeug (100), welches eine Aufhängungsstruktur (208) und eine Gondel (204) nach einem der vorhergehenden Ansprüche, die an der Aufhängungsstruktur (208) aufgehängt ist, umfasst.

## Claims

1. Nacelle (204) for an aircraft (100), comprising a structure (50), a cap (220) attached to the structure (50) and a seal system (300) comprising:
- an arch (302) forming a channel (303) which extends beneath a rear edge of the cap (220) and which has a bottom, the arch (302) being attached to the structure (50),
- a seal (306) in the form of a solid block accommodated in the channel (303) and positioned beneath the rear edge of the cap (220), **characterized in that** the nacelle further comprises
- a spring system (308) arranged to move the seal (306) away from the bottom, and
- retaining means (310) arranged to prevent the seal (306) from leaving the channel (303) under the action of the spring system (308).

2. Nacelle (204) according to Claim 1, **characterized in that** the retaining means (310) comprise a plurality of inserts (312), each one having a first end that is secured to the seal (306) and a second end that passes through the bottom of the channel (303) through a hole (314) through said bottom and provided therefor, and a shoulder (316) which is secured to the second end of the insert (312) and whose dimensions prevent it from passing through the hole (314) in the bottom.

3. Nacelle (204) according to Claim 2, **characterized in that** a central insert (312) is arranged at the level of a middle plane (XZ), and **in that** the hole (314) corresponding to the central insert (312) is a circular bore that provides a sliding fit between the insert (312) and the hole (314).

4. Nacelle (204) according to one of Claims 1 to 3, **characterized in that** the spring system (310) comprises a plurality of spring blades (320), **in that** each spring blade (320) is arranged between the seal (306) and the bottom of the channel (303), and **in that** each spring blade (320) comprises a central portion (522) attached to the bottom of the channel (303) and two wings (524) that are positioned on either side of the central portion (522) and are oriented towards the seal (306).

5. Nacelle (204) according to one of Claims 1 to 4, **characterized in that** the seal (306) consists of a core (306a) which is oriented towards the bottom of the channel (303), and of a strip (306b) which is secured to the core (306a) and is designed to press against the cap (220).

6. Nacelle (204) according to Claim 5, **characterized in that** the strip (306b) has a Shore 00 hardness of between 30 and 40, and the core (306a) has a Shore 00 hardness of between 80 and 90.

7. Nacelle (204) according to either of Claims 5 and 6, **characterized in that** the walls of the core (306a) that are in contact with the walls of the channel (303) and the spring system (310) are covered with a fabric.

8. Nacelle (204) according to one of Claims 1 to 7, **characterized in that** the arch (302) has a staircase-like cross section, of which: a first riser (302a) is attached to the structure (50); a second riser (302b) extends parallel to the structure (50) and at a distance therefrom so as to delimit between them the thickness of the channel (303); and the step (302c) extends between the two risers (302a-b) and forms the bottom of the channel (303).

9. Nacelle (204) according to one of Claims 1 to 7, **characterized in that** the arch (302) has a U-shaped cross section that forms the channel (303) and is attached by one of its flanks to the structure (50).

10. Aircraft (100) comprising a mounting pylon (208) and a nacelle (204) according to one of the preceding claims, mounted on said mounting pylon (208).
